# EUROPÄISCHE PATENTSCHRIFT

(11) **EP 3 668 358 B1**
(45) Veröffentlichungstag und Bekanntmachung des Hinweises auf die Patenterteilung: **18.01.2023**
(21) Anmeldenummer: 18745878.1
(22) Anmeldetag: 20.07.2018
(51) Int. Cl.: A47J 31/54, A47J 31/60

(54) **VORRICHTUNG ZUM ZUBEREITEN VON HEISSGETRÄNKEN**
MACHINE FOR PREPARING HOT BEVERAGES
DISPOSITIF DE PRÉPARATION DE BOISSONS CHAUDES

(30) Priorität: 15.08.2017 DE 102017118598
(43) Veröffentlichungstag der Anmeldung: 24.06.2020
(73) Patentinhaber: FRANKE Kaffeemaschinen AG, 4663 Aarburg (CH)
(72) Erfinder: VETTERLI, Heinz, 8855 Wangen (CH); MÜLLER, Simon, 5037 Muhen (CH)
(74) Vertreter: LBP Lemcke, Brommer & Partner Patentanwälte mbB
(86) Internationale Anmeldenummer: PCT/EP2018/069774
(87) Internationale Veröffentlichungsnummer: WO 2019/034374

(56) Entgegenhaltungen:
- EP-A1- 2 080 461
- EP-A2- 2 423 619
- DE-A1-102006 042 902
- DE-A1-102010 012 788

## Beschreibung

Die vorliegende Erfindung betrifft eine Vorrichtung zum Zubereiten von Heißgetränken wie etwa Tee- oder Kaffeegetränke, mit einem Getränkeauslass zur Ausgabe eines zubereiteten Heißgetränks, mit einem Durchlauferhitzer zur Erhitzung von Wasser bei der Zubereitung des Heißgetränks, mit einem Durchflussmesser zur Volumenbestimmung von durch den Durchlauferhitzer strömendem Wasser, und mit einem in Durchflussrichtung hinter dem Durchlauferhitzer angeordneten, als steuerbares Wegeventil ausgebildeten Drainageventil, über das durch den Durchlauferhitzer strömendes Wasser statt in Richtung des Getränkeauslasses in eine Abwasserleitung oder einen Abwassersammelbehälter geleitet werden kann.

Im Stand der Technik sind Kaffeevollautomaten bekannt, welche auf Knopfdruck portionsweise frischgebrühte Kaffeegetränke zubereiten. Das hierfür erforderliche Heißwasser wird üblicherweise in einem Heißwasserboiler vorgehalten, sodass eine lange Aufheizzeit entfällt. Vereinzelt wurden auch Kaffeevollautomaten vorgeschlagen, bei denen Wasser zum Zeitpunkt des Getränkebezugs mit einem Durchlauferhitzer erhitzt wird.

Bekannt ist auch, dass bei Kaffeevollautomaten von Zeit zu Zeit eine Entkalkung des Heißwassererzeugers durchgeführt werden muss. Hierzu sind beispielsweise Lösungen bekannt wie in der WO 2013/023963 A1 oder der EP 2705784 A1, bei denen eine Kartusche mit einem wasserlöslichen Entkalkungsmittel eingesetzt bzw. an die Vorrichtung angeschlossen wird, um einen Entkalkungsvorgang durchzuführen. Bei der CH 709738 wird an die Kaffeemaschine eine Entkalkungsmittel-Applikationsvorrichtung mit einer in einem Behälter mit veränderlichem Volumen aufgenommenen Entkalkungslösung angeschlossen.

DE 10 2006 042902 A1, EP 2 080 461 A1 und EP 2 423 619 A2 zeigen Vorrichtungen, bei denen der Verkalkungsgrad eines Erhitzers bestimmt wird. DE 10 2010 012788 A1 zeigt eine Getränkemaschine, bei der ein steuerbares Ventil stromab eines Durchlauferhitzers angeordnet ist.

Die vorliegende Erfindung hat sich zur Aufgabe gesetzt, eine Vorrichtung zum Zubereiten von Heißgetränken anzugeben, mit der Heißgetränke schnell und zuverlässig zubereitet werden können, die wartungsarm und reparaturunanfällig ist und die für einen Benutzer bzw. ein Bedienpersonal einfach und betriebssicher zu bedienen ist. Heißgetränke können in diesem Zusammenhang frisch gebrühter Kaffee oder Tee, wie auch Instantgetränke wie etwa Kraftbrühe, Instanttees, löslicher Kaffee, Instantschokoladengetränke oder dergleichen sein.

Die vorliegende Erfindung verwendet daher in Abkehr von existierenden Kaffeevollautomaten mit einem Boiler einen leichten und kompakten Durchlauferhitzer zur Heißwasserbereitung. Ein entsprechender Durchlauferhitzer, der im Rahmen der vorliegenden Erfindung Anwendung finden kann, ist zum Beispiel in der WO 2013/189869 A1 angegeben, auf die hier zur Vermeidung unnötiger Wiederholungen vollinhaltlich Bezug genommen wird.

Die Erfindung basiert jedoch auf der Erkenntnis, dass bei einem im Rahmen der vorliegenden Erfindung geeigneten Durchlauferhitzer aufgrund der zur schnellen Erwärmung des Wassers erforderlichen hohen Temperaturen und der engen, aber langen Strömungswege im Durchlauferhitzer, dieser anfällig für Verkalkung ist. Im Rahmen der vorliegenden Erfindung ist daher eine Steuervorrichtung vorgesehen, die eine Verkalkungserkennungsfunktion zur Bestimmung eines Verkalkungszustands des Durchlauferhitzers anhand von Messerwerten des Durchflussmessers aufweist. Diese ist so ausgebildet, dass sie während einer Bestimmung des Verkalkungszustands das Drainageventil in seine Schaltstellung schaltet, in der der Fluidfluss von dem Durchlauferhitzer direkt in die Abwasserleitung oder den Abwassersammelbehälter geleitet wird. Der Verkalkungszustand wird also nur bei geöffnetem Drainageventil ermittelt.

Die Durchflussrate, die über den Durchflussmesser gemessen werden kann, hängt einerseits von der Druckdifferenz zwischen Eingang und Ausgang des Durchlauferhitzers, anderseits vom Leitungsquerschnitt und damit vom Verkalkungszustand ab. Bei bekanntem Eingangsdruck, z.B. dem über einen Druckbegrenzer einstellbaren Leitungsdruck, einem bekannten Pumpenvordruck bei Verwendung einer Wasserpumpe oder einem mittels Druckmesser gemessenen Druck, kann somit der Verkalkungszustand bestimmt werden. Das geöffnete Drainageventil stellt dabei sicher, dass bei der Messung nur der Druckverlust am Durchlauferhitzer berücksichtigt wird und nicht der an weiter stromabwärts angeordneten Baugruppen, wie etwa einer Brühkammer oder einer Mischkammer.

Aufgrund des erkannten Verkalkungszustandes kann rechtzeitig eine Meldung erzeugt werden, dass ein Entkalkungsvorgang erforderlich ist und bei Gelegenheit gestartet bzw. durchgeführt werden sollte. Damit wird verhindert, dass sich der Durchlauferhitzer zusetzen kann, denn ist der Durchlauferhitzter erst einmal komplett zugesetzt, so lässt er sich nicht mehr entkalken und muss ausgetauscht oder zerlegt werden.

Zweckmäßigerweise dient das Drainageventil dazu, in einer Aufwärmphase des Durchlauferhitzers, den vom Durchlauferhitzer kommenden Fluidfluss in die Abwasserleitung oder den Abwassersammelbehälter zu leiten, so dass erst nach dem Aufwärmvorgang ausreichend heißes Wasser Richtung Getränkeauslass geleitet wird, das noch nicht ausreichend heiße Wasser während des Aufwärmens jedoch in den Ablauf gelangt. Hierbei kann die Steuerung so ausgebildet sein, dass die Bestimmung des Verkalkungszustands während der Aufwärmphase durchgeführt wird. Somit geschieht die Bestimmung des Verkalkungszustandes automatisch während des normalen Betriebs und erfordert somit keine Betriebsunterbrechung oder separate Wartungsdurchläufe.

Hierbei wird vorzugsweise die Aufwärmphase bei jedem Bezug eines Heißgetränks ausgeführt. Der Durchlauferhitzer wird also nach jedem Getränkebezug abgeschaltet und kann abkühlen. Dies vermindert die Verkalkung des Durchlauferhitzers. Das Aufheizen erfolgt ausreichend schnell, sodass es im Betrieb keine Beeinträchtigung darstellt. Die Bestimmung des Verkalkungszustandes kann selbstverständlich ebenfalls bei jedem einzelnen Getränkebezug durchgeführt werden. Es kann aber auch ausreichend sein, beispielsweise nur bei jedem zehnten Heißgetränk eine Messung des Verkalkungszustandes durchzuführen.

In gleicher Weise kann das Drainageventil auch dazu dienen, in einer Abkühlphase des Durchlauferhitzers, den vom Durchlauferhitzer kommenden Fluidfluss in die Abwasserleitung oder den Abwassersammelbehälter zu leiten. Somit kann der Durchlauferhitzer nach Produktbezug mit Wasser nachgekühlt werden, um so eine Verkalkung durch im Durchlauferhitzer verbliebenes Heißwasser zu vermindern. Auch hierbei ist es zweckmäßig, die Abkühlphase bei jedem Produktbezug zu durchlaufen. Da somit während der Abkühlphase das Drainageventil geöffnet ist, kann alternativ (oder kumulativ) zur Aufwärmphase eine Bestimmung des Verkalkungszustands in der Abkühlphase durchgeführt werden.

Selbstverständlich ist es nicht erforderlich, den Durchlauferhitzer nach jedem einzelnen Getränkebezug abzuschalten. Sind bereits mehrere Getränke zur Ausgabe vorgewählt, so kann es auch zweckmäßig sein, den Durchlauferhitzer auch erst nach Bezug des letzten Getränks abzuschalten.

Zur Bestimmung des Wasserdrucks am Eingang des Durchlauferhitzers ist es zweckmäßig, einlassseitig am Durchlauferhitzer einen Druckmesser anzuordnen. Damit kann der Eingangsdruck zuverlässig ermittelt werden und die Erkennung des Verkalkungszustandes wird verbessert.

Bei einer Weiterbildung der Erfindung weist der Durchlauferhitzers einen gewendeten Strömungskanal mit einem Einlass und einem Auslass für eine durchströmende, zu erhitzende Flüssigkeit auf. Hierbei ist es vorteilhaft, den Strömungskanal so auszubilden, dass sich dessen Kanalquerschnitt zumindest in einem Endbereich in Richtung des Auslasses erweitert. Die trägt der Erkenntnis Rechnung, dass der Strömungskanal des Durchlauferhitzers am stärksten zu seinem Ende hin von Verkalkung betroffen ist, da hier die höchsten Wassertemperaturen erreicht werden.

Versuche haben ergeben, dass bei einem gleichförmigen Kanaldurchmesser der Zustand, in dem zwar eine Verkalkung durch Abnahme der Durchflussrate detektiert wird, der Strömungskanal aber noch durchlässig ist, und der Zustand, in dem der Strömungskanal dann völlig verstopft ist, sehr rasch aufeinander folgen können. Mit anderen Worten bleibt nur eine recht kurze Zeitspanne zu reagieren und eine Entkalkung einzuleiten. Ist der Durchlauferhitzer nämlich erst einmal zugesetzt, so ist es nicht mehr möglich, den Kalk mit einem Entkalkungsmittel aufzulösen und den Durchlauferhitzer wieder frei zu bekommen. Bei einem hier vorgeschlagenen Kanalquerschnitt, der sich in Richtung des Auslasses erweitert, erfolgt die Abnahme der Durchflussrate und damit das Zusetzen des Strömungskanals dagegen wesentlich langsamer als bei gleichbleibendem Kanalquerschnitt. Daher verbleibt mehr Zeit, die Entkalkung beispielsweise nach Betriebsschluss eines Restaurants oder Ladengeschäfts durchzuführen, so dass die Betriebssicherheit insgesamt verbessert wird.

Die Verwendung eines sich im Querschnitt erweiternden Strömungskanals bei einem Durchlauferhitzer zur Erzeugung von Heißwasser für eine Getränkezubereitung ist grundsätzlich unabhängig von einer Erkennung des Verkalkungszustandes im Durchlauferhitzer und kann deshalb auch ohne eine automatische Erkennungsfunktion wie vorstehend erläutert angewandt werden. Ein Heißgetränkeautomat mit einem solchen Durchlauferhitzer, dessen Kanalquerschnitt sich in zumindest einem Endbereich in Richtung des Auslasses erweitert stellt daher einen eigenständigen erfinderischen Aspekt dar.

Bei der Vorrichtung zur Heißgetränkezubereitung kann es sich vorzugsweise um einen Getränkevollautomaten handeln, der nach einer Getränkeauswahl vollautomatisch das entsprechend gewählte Heißgetränk zubereitet und in ein bereitgestelltes Trinkgefäß ausgibt. Insbesondere bei einem Getränkevollautomaten ist es zweckmäßig, wenn ein Entkalkungssystem zum automatischen Entkalken des Durchlauferhitzers vorgesehen ist. Auf diese Weise kann, sobald dies erforderlich ist, zu beliebiger Zeit und ohne größeren Aufwand eine Entkalkung des Durchlauferhitzers durchgeführt werden. In der Regel geschieht dies zu Beginn oder nach Beendigung eines Betriebs durch den Bediener auf einen einfachen Knopfdruck hin. Die Getränkezubereitungsvorrichtung führt dann, ohne dass weitere Bedienschritte wie etwa das Einsetzen einer Entkalkerkartusche oder Ähnliches erforderlich wären, die notwendigen Schritte zum Entkalken des Durchlauferhitzers durch.

Bei einer bevorzugten Ausführungsform umfasst das Entkalkungssystem einen Mischbehälter zum Anmischen einer Entkalkungsmittellösung, einen Aufnahmeraum für einen Vorratsbehälter für flüssiges Entkalkerkonzentrat sowie eine Dosierpumpe zum dosierten Fördern von Entkalkerkonzentrat aus dem Vorratsbehälter in den Mischbehälter. In dem Mischbehälter wird somit bei Bedarf, also wenn ein Entkalkungsvorgang durchgeführt werden soll, aus dem flüssigen Entkalkerkonzentrat, welches von der Getränkezubereitungsvorrichtung selbsttätig über die Dosierpumpe aus dem Vorratsbehälter in den Mischbehälter gefördert wird, und Wasser die Entkalkungsmittellösung gemischt.

Die Verwendung eines flüssigen Entkalkerkonzentrats hat den Vorteil, dass in die Getränkezubereitungsvorrichtung eine Konzentratmenge für eine Vielzahl von Entkalkungsvorgängen bevorratet werden kann, sodass ein Auswechseln oder Nachfüllen des Vorratsbehälters auch bei häufigen Entkalkungsvorgängen nur in größeren Zeitabständen erforderlich ist. Dies vermindert den notwendigen Wartungsaufwand erheblich und ermöglicht es dem Bediener ohne technische Kenntnisse die Entkalkung regelmäßig durchzuführen. Zudem lässt sich ein flüssiges Entkalkerkonzentrat einfach und betriebssicher über eine Dosierpumpe dosieren, sodass die Entkalkungsmittellösung automatisiert und in stets der richtigen, gewünschten Dosierung gemischt werden kann.

Zweckmäßigerweise umfasst die Getränkezubereitungsvorrichtung eine Wasserpumpe, die Wasser aus einer Trinkwasserzuleitung, beispielsweise einem Wasseranschluss oder einem in den Getränkevollautomaten eingesetzten Wasserbehälter, entnimmt und zu dem Durchlauferhitzer fördert. Die Wasserpumpe sorgt für einen gleichmäßigen und ausreichend hohen Druck, der insbesondere zur Zubereitung von Espresso-Kaffee notwendig ist, um eine schöne und standfeste Crema zu erhalten.

Der in der Vorrichtung eingesetzte Durchflussmesser ist hierbei unter anderem zur Volumenbestimmung von mittels der Wasserpumpe gefördertem Wasser vorgesehen. Ein solcher Durchflussmesser zur Volumenbestimmung bietet im Rahmen der vorliegenden Erfindung gleich in mehrerlei Hinsicht Vorteile: Einerseits kann über den Durchflussmesser ein Frischwasservolumen abgemessen werden, welches über die Wasserpumpe in den Mischbehälter eingefüllt wird, um die Entkalkungsmittellösung zu mischen. Andererseits lässt sich mithilfe des Durchflussmessers wie bereits erläutert eine Durchflussrate, also die Volumenmenge pro Zeiteinheit, bestimmen, die durch den Durchlauferhitzer fließt und daraus kann der Verkalkungszustand des Durchlauferhitzers ermittelt werden. Schließlich dient der Durchflussmesser natürlich auch dazu, die Frischwasserportionen bei der Zubereitung unterschiedlicher Heißgetränke abzumessen.

Gemäß einer Ausführungsform der Erfindung ist daher vorgesehen, dass die Wasserpumpe saugseitig über ein erstes Wegeventil umschaltbar mit dem Mischbehälter verbindbar ist, in welchem die Entkalkungsmittellösung aufgenommen bzw. angemischt ist. Somit kann in der umgeschalteten Ventilstellung des ersten Wegeventils die Entkalkungsmittellösung aus dem Mischbehälter über die Wasserpumpe zu dem Durchlauferhitzer gefördert werden.

Gemäß einer weiteren Ausführungsform ist vorgesehen, dass die Wasserpumpe druckseitig über ein zweites Wegeventil umschaltbar mit einer Wasserzuleitung des Mischbehälters verbindbar ist. Zum Anmischen einer Entkalkungsmittellösung in dem Mischbehälter kann somit in der umgeschalteten Ventilstellung des zweiten Wegeventils von der Wasserpumpe Wasser zu dem Mischbehälter gefördert werden.

Das im Rahmen der vorliegenden Erfindung vorgesehene Drainageventil wird im Rahmen eines automatischen Entkalkungsvorgangs vorzugsweise in eine Schaltstellung gebracht, in der die Entkalkungsmittellösung nach Durchströmen des Durchlauferhitzers nicht in Richtung des Getränkeauslasses, beispielsweise zu einer Brühvorrichtung geleitet wird, sondern direkt in eine Abwasserleitung oder einen entsprechenden Abwassersammelbehälter gelangt. Indem die Entkalkungsmittellösung nicht zum normalen Getränkeauslauf ausgegeben wird, wird eine versehentliche Fehlbedienung vermieden, die z.B. zu einer Ausgabe von Entkalkungsmittellösung in ein Getränkebehältnis eines Kunden führen könnte.

Zur vollautomatischen Durchführung von Entkalkungsvorgängen ist im Rahmen der vorliegenden Erfindung eine programmierbare Steuerungsvorrichtung sinnvoll und vorteilhaft, die ausgebildet bzw. programmiert ist, zur Durchführung eines automatischen Entkalkungsvorgang die Dosierpumpe anzusteuern, um eine vorbestimmte Menge an Entkalkerkonzentrat aus dem Vorratsbehälter in den Mischbehälter zu fördern; die weiter programmiert ist, das zweite Wegeventil umzuschalten, um die Wasserpumpe mit der Wasserzuleitung des Mischbehälters zu verbinden und die Wasserpumpe anzusteuern, um eine vorgebbare Menge an Wasser in den Mischbehälter zu fördern; und die weiter programmiert ist, das erste Wegeventil umzuschalten, um die Wasserpumpe saugseitig mit der Entnahmeleitung des Mischbehälters zu verbinden und die Entkalkungsmittellösung aus dem Mischbehälter zu dem Durchflusserhitzer zu fördern.

Im Rahmen der vorliegenden Erfindung ist außerdem ein Verfahren zur Bestimmung eines Verkalkungszustands bei einer Vorrichtung zur Zubereitung von Heißgetränken mit einem Durchlauferhitzer zur Erhitzung von Wasser für die Zubereitung eines Heißgetränks vorgesehen. Bei dem Verfahren wird mittels eines Durchflussmessers eine Durchflussrate von durch den Durchlauferhitzer strömenden Wassers gemessen und anhand der Durchflussrate der Verkalkungszustand bestimmt. Hierbei ist erfindungsgemäß vorgesehen, dass während der Bestimmung des Verkalkungszustandes ein in Durchflussrichtung hinter dem Durchlauferhitzer angeordnetes Drainageventil in eine Schaltstellung gebracht wird, in der durch den Durchlauferhitzer (10, 20) strömendes Wasser statt in Richtung eines Getränkeauslasses der Vorrichtung direkt in eine Abwasserleitung oder einen Sammelbehälter geleitet wird.

Weitere Vorteile und Eigenschaften der vorliegenden Erfindung ergeben sich aus der nachfolgenden Beschreibung eines Ausführungsbeispieles anhand der Figuren. Hierbei zeigt
- Figur 1: ein Wasserflussschema eines Getränkevollautomaten mit zwei Durchlauferhitzern und einem integrierten Entkalkungssystem zum automatischen Entkalken der Durchlauferhitzer und
- Figur 2: in einem Diagramm den Verlauf der Wassertemperatur am Ausgang des Durchlauferhitzers über die Zeit und die Schaltzustände des Drainageventils.

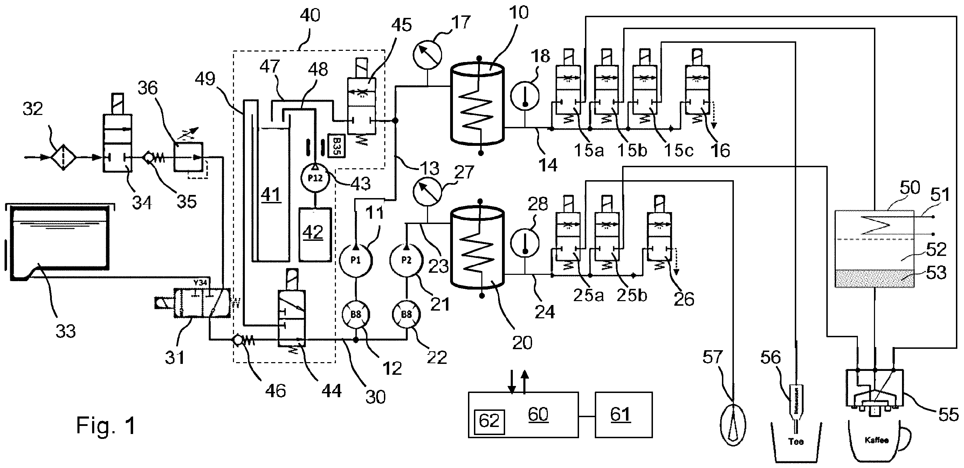

In Figur 1 ist in einem sogenannten Wasserlaufschema der Aufbau einer Vorrichtung zum Zubereiten von Heißgetränken gezeigt, wie er etwa bei einem Kaffeevollautomaten zum Einsatz kommt. Zur Erzeugung von Heißwasser, mit dem Heißgetränke zubereitet werden, dient ein Durchlauferhitzer 10. In Wasserflussrichtung stromaufwärts des Durchlauferhitzers 10 befinden sich eine Wasserpumpe 11 und ein Durchflussmesser 12, die über eine Leitung 13 mit dem Durchlauferhitzer 10 verbunden sind. Am Heißwasserausgang des Durchlauferhitzers 10 sind über eine Leitung 14 mehrere Wegeventile 15a, 15b, 15c und 16 angeschlossen. Optional können am Eingang des Durchlauferhitzers 10 noch ein Druckmesser 17 und am Ausgang des Durchlauferhitzers 10 ein Temperaturfühler 18 angeordnet sein.

Zusätzlich zu dem für die Zubereitung von Heißwasser vorgesehenen Durchlauferhitzer 10 besitzt die Vorrichtung einen zweiten Durchlauferhitzer 20, der zur Erzeugung von Dampf dient, der ebenfalls zur Zubereitung von Heißgetränken, beispielsweise zur Nacherwärmung oder zum Aufschäumen von Milch oder anderen Getränken dienen kann. Auch der zweite Durchlauferhitzer 20, der hier zur Erzeugung von Dampf dient, wird er im Sinne der vorliegenden Erfindung ebenfalls als Heißwassererzeuger im weiteren Sinne verstanden.

Stromaufwärts des zweiten Durchlauferhitzers 20 befinden sich ebenfalls eine Wasserpumpe 21 und ein Durchflussmesser 22, die über eine Leitung 23 mit dem Zulauf des Durchlauferhitzers 20 verbunden sind. Am Heißwasser- bzw. Dampfausgang des Durchlauferhitzers 20 sind über eine Leitung 24 verschiedene Wegeventile 25a, 25b, 26 angeschlossen. Optional können auch am Eingang des Durchlauferhitzers 20 ein Druckmesser 17 und am Ausgang des Durchlauferhitzers 20 ein Temperaturfühler 28 angeordnet sein.

Die beiden Durchflussmesser 12, 22 sind im Ausführungsbeispiel jeweils vor den zugehörigen Pumpen 11, 21 angeordnet. Es wäre jedoch in gleicher Weise möglich, die Durchflussmesser 12, 22 in Flussrichtung hinter den zugehörigen Wasserpumpen 11, 21 anzuordnen. Saugseitig sind die beiden Wasserpumpen 11, 21 über eine Trinkwasserzuleitung 30 und ein optionales Umschaltventil 31 mit einem Trinkwasseranschluss 32 des öffentlichen Leitungsnetzes oder einem an oder in dem Gerät vorgesehenen Wassertank 33 verbunden. Im Falle eines Anschlusses an ein öffentliches Leitungsnetz 32 sind in der Zuleitung ein Absperrventil 34, ein Rückschlagventil 35 sowie ein Druckminderer 36 vorgesehen.

Die Wasserpumpe 11 fördert Trinkwasser aus der angeschlossenen Trinkwasserzuleitung 30 über die Leitung 13 zu dem Durchlauferhitzer 10, von wo aus das Heißwasser über das Wegeventil 15b zu einer Brühgruppe 50 gefördert werden kann. Die Brühgruppe 50 umfasst in an sich bekannter Weise eine Heizung 51, mit der das zugeführte Heißwasser zum Sieden gebracht oder die Brühgruppe vorgewärmt werden kann, und eine Brühkammer 52, in die portioniertes, frisch gemahlenes Kaffeepulver 53 eingefüllt wird. Eine Brühgruppe, die im Rahmen der vorliegenden Erfindung eingesetzt werden kann, ist beispielsweise in der EP 2561778 A1 beschrieben, auf die, um unnötige Wiederholungen zu vermeiden, hiermit vollinhaltlich Bezug genommen wird.

Die Brühgruppe 50 ist so ausgestaltet, dass sie geöffnet werden kann, um eine portionierte Menge Kaffeepulver einzufüllen, welches zuvor in einer Mühle des Kaffeevollautomaten portionsweise frisch gemahlen wurde. Außerdem kann bei geöffneter Brühgruppe nach dem Brühvorgang der verbleibende Kaffeesatz in einen Tresterbehälter ausgeworfen werden. Die Brühgruppe weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter dem Druck der Pumpe 11 stehenden Brühwasser aus dem Durchlauferhitzer 10 durchströmt werden. Der fertig gebrühte Kaffee wird von der Brühgruppe 50 über eine Auslassleitung zu einem Auslauf 55 für Kaffeegetränke geleitet. Über das Wegeventil 15a kann Heißwasser direkt zu dem Auslauf 55 geleitet werden, beispielsweise zu Reinigungszwecken oder zum Zubereiten von Instantgetränken. Außerdem kann Heißwasser über das Wegeventil 15c auch zu einem separaten Heißwasserauslass 56 geleitet werden, der beispielsweise zur Zubereitung von Tee dient.

Von dem zweiten Durchlauferhitzer 20 erzeugter Dampf kann über das Wegeventil 25a entweder zu einer sogenannten Dampflanze 57 geleitet werden, um beispielsweise Milch aufzuschäumen, außerdem kann Dampf über das Wegeventil 25b auch zu dem Auslauf 55 geleitet werden, um zum Beispiel über eine separate Leitung (nicht gezeigt) zugeleitete Milch zu erwärmen oder aufzuschäumen.

Als Wegeventile ausgebildete Drainageventile 16 und 26 dienen dazu, den Heißwasserausgang des Durchlauferhitzers 10 bzw. des Durchlauferhitzers 20 mit einer sogenannten Drainage, also einer Abwasserleitung oder einem Abwassersammelbehälter für Abwasser zu verbinden. Dies ist unter anderem zum Zwecke einer Entkalkung des zugehörigen Durchlauferhitzers 10, 20 notwendig, um die durch die Durchlauferhitzer 10, 20 geleitete Entkalkerlösung abzuleiten.

Daneben dienen die beiden Drainageventile 16, 26 aber auch dazu, in einer Aufwärmphase des zugehörigen Durchlauferhitzers das durchströmende Wasser in die Abwasserleitung oder den Abwassersammelbehälter zu leiten. Somit wird sichergestellt, dass erhitztes Wasser bzw. Wasserdampf erst nach Erreichen einer vorgebbaren Mindesttemperatur in Richtung des zugehörigen Auslasses geleitet werden. Hingegen wird Wasser, dass während des Aufheizvorgangs noch nicht heiß genug ist, in zum Abwasser abgeleitet wird, also nicht zu einem der Auslässe 55, 56, 57 gelangen kann.

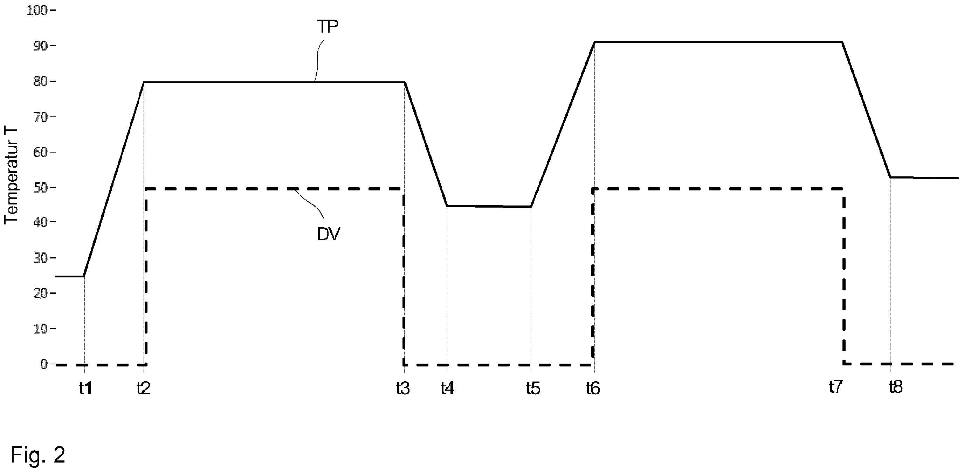

In Figur 2 ist der Temperaturverlauf und der Schaltzustand des Drainageventils 16 gezeigt. Das Drainageventil 16 ist hierbei als stromlos geöffnetes Magnetventil ausgebildet. Die am Ausgang des Durchlauferhitzers 10 von dem Temperaturfühler 18 gemessene Temperaturkurve ist mit TP, der Spulenstrom für das Drainageventil 16 mit DV bezeichnet. Die Kurven sind idealisiert gezeigt. Tatsächlich kann der Temperaturverlauf entsprechend der Temperaturregelung geringfügigen Schwankungen unterworfen sein.

Zu Beginn eines Produktbezugs wird die Wasserpumpe 11 angeschaltet und pumpt Wasser aus der Zuleitung 30 in Richtung des Durchlauferhitzers 10. Da das Drainageventil 16 stromlos, also geöffnet ist, fließt das Wasser von dem Durchlauferhitzer 10 kommend über die Leitung 14 in den Abfluss. Die Ventile 15a, 15b und 15c sind dabei geschlossen. Die Wassertemperatur TP am Ausgang des Durchlauferhitzers entspricht der Vorlauftemperatur, im vorliegenden Fall etwa 24°C.

Zu einem Zeitpunkt t1 wird die Heizung des Durchlauferhitzers 10 angeschaltet. Die Temperatur TP steigt nun an bis zu einer eingestellten Solltemperatur. Diese beträgt für den ersten Produktbezug 80°C. Zu dem Zeitpunkt t2 ist die Solltemperatur erreicht. Nun wird das Drainageventil 16 geschlossen (Spulenstrom an) und das Ventil 15b geöffnet, so dass das nun genügend heiße Wasser nicht mehr zum Abfluss, sondern zur Brühkammer 50 geleitet wird. Es beginnt die Zubereitung eines Kaffeegetränks, welches am Auflauf 50 aufgegeben wird. Die Wassertemperatur TP wird durch Regelung der Heizleistung des Durchlauferhitzers 10 im Rahmen der Regelgenauigkeit konstant gehalten. Der Temperaturverlauf ist in Figur 2 wie gesagt idealisiert dargestellt und kann natürlich im Bereich der Regelgenauigkeit schwanken.

Zu einem Zeitpunkt t3 ist die Zubereitung des Kaffeegetränks abgeschlossen. Das Ventil 15b wird geschlossen und das Drainageventil 16 geöffnet. Gleichzeitig wird die Heizung des Durchlauferhitzers 10 abgeschaltet. Da die Pumpe 11 weiter Wasser fördert, sinkt nun bei ausgeschalteter Heizung die Wassertemperatur am Ausgang des Durchlauferhitzers 10 langsam ab, da dieser abkühlt. Zu einem Zeitpunkt t4 wird die Wasserpumpe 11 abgeschaltet, es fließt kein Wasser mehr, die Temperatur des in der Leitung verbliebenen Restwassers bleibt annähernd konstant bzw. sinkt nur noch langsam ab.

Ein zweiter Produktbezug beginnt zum Zeitpunkt t5 mit dem Anschalten der Wasserpumpe 11 sowie der Heizung des Durchlauferhitzers 10. Das Drainageventil 16 ist immer noch geöffnet, so dass Wasser aus dem Durchlauferhitzer 10 weiter in den Abfluss abgeleitet wird. Die Wassertemperatur TP steigt wieder an, da die Heizung den Durchlauferhitzer aufwärmt. Der Zieltemperatur beim zweiten Produktbezug beträgt nun 92°C. Bei Erreichen der Zieltemperatur zum Zeitpunkt t6 wird das Drainageventil 16 geschlossen und das Ventil 15b zur Brühkammer 50 geöffnet. Nach Ende des Produktbezugs wird zum Zeitpunkt t7 das Ventil 15b wieder geschlossen und das Drainageventil 16 geöffnet. Außerdem wird die Heizung des Durchlauferhitzers 10 abgeschaltet. Das nun wieder abkühlende Wasser wird in den Abfluss geleitet, bis zum Zeitpunkt t8 die Wasserpumpe 11 abschaltet. Der Durchlauferhitzer wird nun von dem durchströmenden Wasser abgekühlt um die Verkalkung zu vermindern.

Wesentlich ist, dass während der Zeitspannen t1-t2 und t5-t6, also während des Aufheizens, als auch während den Zeitspannen t3-t4 und t7-t8, also während des Abkühlens, das Drainageventil geöffnet ist und somit in diesen Phasen eine Bestimmung der Durchflussrate durch den Durchlauferhitzer durchgeführt werden kann. Nimmt diese so gemessene Durchflussrate über die Zeit deutlich ab und sinkt unter eine Mindestdurchflussrate, so kann hieraus geschlussfolgert werden, dass der Strömungsweg durch den Durchlauferhitzer 10 durch Verkalkung verengt ist und daher ein Entkalkungsvorgang durchgeführt werden sollte. Dieser wird im Ausführungsbeispiel manuell gestartet und dann automatisiert durchgeführt.

Zu diesem Zweck ist ein integriertes Entkalkungssystem 40 vorgesehen, welches im Folgenden erläutert wird. Das Entkalkungssystem 40 umfasst einen Mischbehälter 41, einen Vorratsbehälter 42 für flüssiges Entkalkerkonzentrat und eine Dosierpumpe 43. Die saugseitig der Wasserpumpen 11, 21 befindliche gemeinsame Trinkwasserzuleitung 30 kann über einen Umschaltventil 44 mit einer bis zum Boden des Mischbehälters 41 reichenden Ansaugleitung 49 verbunden werden, um zum Zwecke einer Entkalkung eine Entkalkungsmittellösung aus dem Mischbehälter 41 anzusaugen und zu den Durchlauferhitzern 10, 20 zu fördern. Zuvor wird die Entkalkungsmittellösung im Mischbehälter 41 angemischt, indem über die Dosierpumpe 43 eine dosierbare Menge des Entkalkerkonzentrats über die Zuleitung 48 in den Mischbehälter gefördert wird.

Über ein Wegeventil 45, welches mit der druckseitig an die Pumpe 11 angeschlossenen Zuleitung 13 verbunden ist, kann mittels der Wasserpumpe 11 Frischwasser über die Zuleitung 47 in den Mischbehälter eingefüllt werden. Die Menge des eingefüllten Frischwassers lässt sich hierbei mithilfe des Durchflussmessers 12 bestimmen, sodass das Ventil 45, nachdem eine vorbestimmte Wassermenge in den Mischbehälter 41 eingefüllt wurde, geschlossen werden kann.

Nachdem die Entkalkungsmittellösung im Mischbehälter 41 angemischt wurde, kann das über das Ventil 44 die Zuleitung 30 mit der Ansaugleitung 49 verbunden werden. Anschließend wird das Drainageventil 16 geöffnet und über die Wasserpumpe 11 die Entkalkungsmittellösung aus dem Mischbehälter 41 durch den Durchlauferhitzer 10 gefördert. Anschließend wird das Umschaltventil 44 wieder in die Betriebsstellung zurückgeschaltet, in der die Zuleitung 30 mit dem öffentlichen Wasseranschluss 32 oder dem Wassertank 33 verbunden ist und mittels der Wasserpumpe 11 der Durchlauferhitzer 10 nochmals mit Frischwasser durchgespült. Ein Rückschlagventil 46 verhindert, dass gegebenenfalls noch in der Zuleitung 30 befindliche Entkalkungsmittellösung in den Frischwassertank 33 zurückströmen kann. In gleicher Weise kann auch der Durchlauferhitzer 20 entkalkt und gereinigt werden, indem über die Wasserpumpe 21 Entkalkungsmittellösung aus dem Mischbehälter 41 durch den Durchlauferhitzer 20 und über das Drainageventil 26 in den Auslauf gefördert wird.

Auch wenn der Durchlauferhitzer 20 im vorliegenden Ausführungsbeispiel zur Erzeugung von Dampf dient, wird er im Sinne der vorliegenden Erfindung ebenfalls als Heißwassererzeuger im weiteren Sinne verstanden. Es ist offensichtlich, dass das Wegeventil 45 des Entkalkungssystems 40 statt über die Leitung 13 mit der Wasserpumpe 11 auch über die Leitung 23 mit der Wasserpumpe 21 verbunden sein kann. Bei den Durchlauferhitzern 10, 20, die im vorliegenden Ausführungsbeispiel zum Einsatz kommen, handelt es sich um kompakte Durchlauferhitzer in Form sogenannter Heizpatronen. Diese besitzen einen dünnwandigen, mit elektrischen Heizdrähten versehenen zylindrischen Innenkörper, dessen Mantelfläche außenseitig mit einer wendelförmig verlaufenden Nut versehen ist, die nach außen hin von einem äußeren zylindrischen Mantel begrenzt wird und so einen Strömungsweg für das zu erhitzende Leitungswasser bildet. Eine solche Heizpatrone ist beispielsweise in der Schrift WO 2013/189869 A1 beschrieben, auf die zur Vermeidung unnötiger Wiederholungen hiermit vollinhaltlich Bezug genommen wird. Zum Ende hin, also in Richtung des Ausgangs des Durchlauferhitzers erweitert sich der Querschnitt der Nut. Dies bewirkt, dass eine zum Ende hin stärkere Verkalkung nicht vorzeitig, also vor einer etwaigen Erkennung und Beseitigung einer Verkalkung vollständig zusetzen und den Durchlauferhitzer damit unbrauchbar machen kann.

Der im Ausführungsbeispiel beschriebene Kaffeevollautomat besitzt außerdem eine programmierbare Steuerung 60 und eine mit der Steuerung 60 verbundene Benutzerschnittstelle 61, beispielsweise in Form eines berührungsempfindlichen Displays oder einer anderweitigen Anzeige- und Eingabeeinheit. Über die Steuerung 60 werden die Funktionen der Wasserpumpen 11, 21, sämtlicher Wegeventile, die Aktivierung der Durchlauferhitzer 10, 20 sowie des Entkalkungssystems 40 und dessen Dosierpumpe 43 angesteuert. Die Steuerung liest auch die Messwerte von den Durchflussmessern 12, 22 aus. Über die Steuerung 60 kann somit sowohl im normalen Betrieb die Zubereitung von Kaffeegetränken oder anderen Heißgetränken gesteuert werden, als auch eine Entkalkung der Durchlauferhitzer 10, 20 mittels des Entkalkungssystems 40 durchgeführt werden. Über die beiden Durchflussmesser 12, 22 kann die Steuerung 60 feststellen, wie lange es dauert, bis eine vorgebbare Menge an Wasser durch die zugehörigen Durchlauferhitzer 10 bzw. 20 geflossen ist. Hieraus lässt sich der Entkalkungszustand der Durchlauferhitzer 10, 20 abschätzen, sodass die Steuerung über die grafische Benutzerschnittstelle 61 eine Meldung erzeugen kann, dass ein automatischer Entkalkungsvorgang erforderlich wäre. Ein Benutzer kann dann über entsprechende Eingabemittel an der Benutzerschnittstelle 61 den automatischen Entkalkungsvorgang auslösen bzw. aktivieren.

Zur Erkennung einer Verkalkung ist in der Steuerung 60 eine Erkennungsfunktion, beispielsweise in Form einer geeigneten Softwareroutine, einem Programmmodul, einem Dienst oder dergleichen implementiert, der vor Durchführung einer Erkennung prüft, ob das Drainageventil 16 bzw. 26 geöffnet und die Wasserpumpe 11 bzw. 21 aktiviert ist, dies gegebenenfalls anweist, und anschließend mit Hilfe des Durchflussmessers 12 bzw. 22 eine Durchflussrate durch den betreffenden Durchlauferhitzer 10, 20 ermittelt. Zusätzlich zur Durchflussrate kann auch noch über den betreffenden Druckmesser 17 bzw. 27 der Druck am Eingang des Durchlauferhitzers 10 bzw. 20 ermittelt werden und anhand des gemessenen Druckwertes der Wert für die gemessene Durchflussrate korrigiert werden. Ist diese, gegebenenfalls auf einen einheitlichen Eingangsdruck normierte Durchflussrate über die Zeit, also über eine Vielzahl von Aufwärm- und Abkühlzyklen, unter eine Mindestdurchflussrate abgesunken, so wird eine Meldung erzeugt, dass ein Entkalkungsvorgang durchgeführt werden soll.

Zur Durchführung des Entkalkungsvorganges wird wie bereits beschrieben zunächst eine dosierte Menge Entkalkerkonzentrat aus dem Vorratsbehälter 42 in den Mischbehälter 41 gefördert und dann über das Wegeventil 45 der Mischbehälter 41 mit Frischwasser aufgefüllt. Die Entkalkungsmittellösung 41 wird dann durch den betreffenden Durchlauferhitzer 10 bzw. 20 geleitet, um diesen zu entkalken. Anschließend wird mit Frischwasser nachgespült. Der Kaffeevollautomat ist dann wieder betriebsbereit.

Als Entkalkerkonzentrat können z.B. Citronensäure, Apfelelsäure oder Weinsäure in Form einer konzentrierten Lösung eingesetzt werden. Das Entkalkerkonzentrat kann entweder in Einwegverpackungen abgefüllt oder in einen befüllbaren Vorratsbehälter bei Bedarf nachgefüllt werden. Hierbei kann der Vorratsbehälter fest in dem Getränkevollautomaten verbaut sein, vorzugsweise jedoch zum Befüllen oder Austausch entnehmbar sein. Im Falle eines Einwegbehälters kann dieser beispielsweise geöffnet bzw. mit der Dosierpumpe verbunden werden, indem in ihn mit einer Entnahmelanze oder einem Dorn eingestochen wird.

## Patentansprüche

1. Vorrichtung zum Zubereiten von Heißgetränken,
- mit einem Getränkeauslass (55) zur Ausgabe eines zubereiteten Heißgetränks,
- mit einem Durchlauferhitzer (10, 20) zur Erhitzung von Wasser bei der Zubereitung des Heißgetränks,
- mit einem Durchflussmesser (12, 22) zur Volumenbestimmung von durch den Durchlauferhitzer (10, 20) strömendem Wasser, und
- mit einem in Durchflussrichtung hinter dem Durchlauferhitzer (10, 20) angeordneten, als steuerbares Wegeventil ausgebildeten Drainageventil (16, 26), über das durch den Durchlauferhitzer (10, 20) strömendes Wasser statt in Richtung des Getränkeauslasses in eine Abwasserleitung oder einen Abwassersammelbehälter geleitet werden kann,
mit einer teuervorrichtung (60), die eine Verkalkungserkennungsfunktion (61) zur Bestimmung eines Verkalkungszustands des Durchlauferhitzers (10, 20) anhand von Messerwerten des Durchflussmessers (12, 22) aufweist, wobei die Steuervorrichtung (60) ausgebildet ist, während einer Bestimmung des Verkalkungszustands das Drainageventil (16, 26) in seine Schaltstellung zu schalten, in von dem Durchlauferhitzer (10, 20) kommendes Wasser direkt in die Abwasserleitung oder den Abwassersammelbehälter geleitet wird.

2. Vorrichtung nach Anspruch 1, bei der das Drainageventil (16, 26) dazu dient, in einer Aufwärmphase des Durchlauferhitzers (10, 20), das vom Durchlauferhitzer (10, 20) kommende Wasser in die Abwasserleitung oder den Abwassersammelbehälter zu leiten und die Steuerung (60) ausgebildet ist, die Bestimmung des Verkalkungszustands während der Aufwärmphase durchzuführen.

3. Vorrichtung nach Anspruch 2, bei der die Aufwärmphase bei jedem Bezug eines Heißgetränks ausgeführt wird.

4. Vorrichtung nach Anspruch 1, bei der das Drainageventil (16, 26) dazu dient, in einer Abkühlphase des Durchlauferhitzers (10, 20), das vom Durchlauferhitzer (10, 20) kommende Wasser in die Abwasserleitung oder den Abwassersammelbehälter zu leiten und die Steuerung (60) ausgebildet ist, die Bestimmung des Verkalkungszustands während der Abkühlphase durchzuführen.

5. Vorrichtung nach Anspruch 3, bei der die Abkühlphase bei jedem Bezug eines Heißgetränks ausgeführt wird.

6. Vorrichtung nach einem der vorangehenden Ansprüche, bei der einlassseitig des Durchlauferhitzers (10, 20) ein Druckmesser (17, 18) angeordnet ist.

7. Vorrichtung nach einem der vorangehenden Ansprüche, bei der der Durchlauferhitzer (10, 20) einen gewendelten Strömungskanal mit einem Einlass und einem Auslass für eine durchströmende, zu erhitzende Flüssigkeit aufweist, dessen Kanalquerschnitt sich zumindest in einem Endbereich in Richtung des Auslasses hin erweitert.

8. Vorrichtung nach einem der vorangehenden Ansprüche, welche mit einem Entkalkungssystem (40) zum automatischen Entkalken des Durchlauferhitzers (10, 20) ausgerüstet ist.

9. Vorrichtung nach Anspruch 8, bei dem das Entkalkungssystem (40) einen Mischbehälter (41) zum Anmischen einer Entkalkungsmittellösung, einen Aufnahmeraum für einen Vorratsbehälter (42) für flüssiges Entkalkerkonzentrat sowie eine Dosierpumpe (43) zur dosierten Förderung von Entkalkerkonzentrat aus dem Vorratsbehälter (42) in den Mischbehälter (41) umfasst, in welchem aus Entkalkerkonzentrat und Wasser die Entkalkungsmittellösung gemischt wird.

10. Vorrichtung nach einem der vorangehenden Ansprüche, welche eine Wasserpumpe (11, 21) aufweist, die Wasser aus einer Trinkwasserzuleitung (30) zu dem Durchlauferhitzer (10, 20) fördert.

11. Vorrichtung nach Anspruch 8 und 10, bei dem die Wasserpumpe (11, 21) saugseitig über ein erstes Wegeventil (44) umschaltbar mit einer Entnahmeleitung (49) eines Mischbehälter (41) verbindbar ist, welcher zur Aufnahme einer Entkalkungsmittellösung dient, um in der umgeschalteten Ventilstellung des ersten Wegeventils (44) die Entkalkungsmittellösung aus dem Mischbehälter (41) zu dem Durchlauferhitzer (10, 20) zu fördern.

12. Vorrichtung nach Anspruch 11, bei dem die Wasserpumpe (11) druckseitig über ein zweites Wegeventil (45) umschaltbar mit einer Wasserzuleitung (47) eines Mischbehälters (41) verbindbar ist, welcher zum Anmischen einer Entkalkungsmittellösung aus einem flüssigen Entkalkerkonzentrat dient, um in der umgeschalteten Ventilstellung des zweiten Wegeventils (45) Wasser zu dem Mischbehälter (41) zu fördern.

13. Vorrichtung nach Anspruch 12, bei der die Steuervorrichtung (60) programmiert ist, zur Durchführung eines automatischen Entkalkungsvorgangs die Dosierpumpe (43) anzusteuern, um eine vorbestimmte Menge an Entkalkerkonzentrat aus dem Vorratsbehälter (42) in den Mischbehälter (41) zu fördern, die weiter programmiert ist, das zweite Wegeventil (45) umzuschalten, um die Wasserpumpe (11) mit der Wasserzuleitung (47) des Mischbehälters (41) zu verbinden, und die Wasserpumpe (11, 21) anzusteuern, eine vorgebbare Menge an Wasser in den Mischbehälter (41) zu fördern, und die weiter programmiert ist, das erste Wegeventil (44) umzuschalten, um die Wasserpumpe (11) saugseitig mit dem Mischbehälter (41) zu verbinden und die Entkalkungsmittellösung aus dem Mischbehälter (41) zu dem Durchlauferhitzer (10, 20) zu fördern.

14. Vorrichtung nach einem der vorangehenden Ansprüche, bei der die Steuerung ausgebildet ist, bei Erreichen eines vorgegebenen Wertes, insbesondere für eine maximale Durchlaufzeit oder eine Mindestdurchflussrate, eine Meldung zu generieren, dass ein Entkalkungsvorgang erforderlich ist.

15. Verfahren zur Bestimmung eines Verkalkungszustands bei einer Vorrichtung zur Zubereitung von Heißgetränken, wobei die Vorrichtung einen Durchlauferhitzer (10, 20) zur Erhitzung von Wasser für die Zubereitung eines Heißgetränks aufweist, bei welchem Verfahren mittels eines Durchflussmessers (12, 22) eine Durchflussrate von durch den Durchlauferhitzer (10, 20) strömenden Wassers gemessen wird und anhand der Durchflussrate der Verkalkungszustand bestimmt wird,
**dadurch gekennzeichnet, dass**
während der Bestimmung des Verkalkungszustandes ein in Durchflussrichtung hinter dem Durchlauferhitzer (10, 20) angeordnetes Drainageventil (16, 26) in eine Schaltstellung gebracht wird, in der durch den Durchlauferhitzer (10, 20) strömendes Wasser statt in Richtung eines Getränkeauslasses (50) der Vorrichtung direkt in eine Abwasserleitung oder einen Sammelbehälter geleitet wird.

## Claims

1. Device for preparing hot beverages,
- having a beverage outlet (55) for dispensing a prepared hot beverage,
- having an instantaneous water heater (10, 20) for heating water during preparation of the hot beverage,
- having a flow meter (12, 22) for determining the volume of water flowing through the instantaneous water heater (10, 20), and
- having a drainage valve (16, 26) which is arranged downstream of the instantaneous water heater (10, 20) in the direction of flow and is in the form of a controllable directional control valve via which water flowing through the instantaneous water heater (10, 20) can be conducted to a waste water line or a waste water collection container instead of in the direction of the beverage outlet,
having a control device (60) which has a scale detection function (61) for determining a scaling level of the instantaneous water heater (10, 20) using measured values of the flow meter (12, 22), wherein the control device (60) is designed, during determination of the scaling level, to switch the drainage valve (16, 26) to its switched position, in which water coming from the instantaneous water heater (10, 20) is conducted directly into the waste water line or the waste water collection container.

2. Device according to claim 1, in which, in a heating-up phase of the instantaneous water heater (10, 20), the drainage valve (16, 26) serves to conduct the water coming from the instantaneous water heater (10, 20) into the waste water line or the waste water collection container and the controller (60) is configured to carry out the determination of the scaling level during the heating-up phase.

3. Device according to claim 2, in which the heating-up phase is carried out each time a hot beverage is dispensed.

4. Device according to claim 1, in which, in a cooling-down phase of the instantaneous water heater (10, 20), the drainage valve (16, 26) serves to conduct the water coming from the instantaneous water heater (10, 20) into the waste water line or the waste water collection container, and the controller (60) is configured to carry out the determination of the scaling level during the cooling-down phase.

5. Device according to claim 3, in which the cooling-down phase is carried out each time a hot beverage is dispensed.

6. Device according to any of the preceding claims, in which a pressure meter (17, 18) is arranged on the inlet side of the instantaneous water heater (10, 20).

7. Device according to any of the preceding claims, in which the instantaneous water heater (10, 20) has a helical flow channel with an inlet and an outlet for a liquid flowing through and to be heated up, the channel cross section thereof being widened at least in an end region in the direction of the outlet.

8. Device according to any of the preceding claims, which is provided with a descaling system (40) for automatically descaling the instantaneous water heater (10, 20).

9. Device according to claim 8, in which the descaling system (40) comprises a mixing container (41) for mixing a descaler solution, a receiving chamber for a storage container (42) for liquid descaler concentrate and a metering pump (43) for metered conveyance of descaler concentrate from the storage container (42) into the mixing container (41), in which the descaler solution is mixed from descaler concentrate and water.

10. Device according to any of the preceding claims, which has a water pump (11, 21) which conveys water from a drinking water supply line (30) to the instantaneous water heater (10, 20).

11. Device according to claim 8 and 10, in which, on the suction side, the water pump (11, 21) is switchably connectable via a first directional control valve (44) to an extraction line (49) of a mixing container (41), which serves to receive a descaler solution in order to convey the descaler solution from the mixing container (41) to the instantaneous water heater (10, 20) when the first directional control valve (44) is in the switched valve position.

12. Device according to claim 11, in which, on the pressure side, the water pump (11) is switchably connectable via a second directional control valve (45) to a water supply line (47) of a mixing container (41) which serves for mixing a descaler solution from a liquid descaler concentrate in order to convey water to the mixing container (41) when the second directional control valve (45) is in the switched valve position.

13. Device according to claim 12, in which, for carrying out an automatic descaling process, the control device (60) is programmed to activate the metering pump (43) in order to convey a predetermined quantity of descaler concentrate from the storage container (42) into the mixing container (41), said control device is further programmed to switch the second directional control valve (45) in order to connect the water pump (11) to the water supply line (47) of the mixing container (41) and to activate the water pump (11, 21), to convey a predeterminable quantity of water into the mixing container (41), and said control device is further programmed to switch the first directional control valve (44) in order to connect the water pump (11) on the suction side to the mixing container (41) and to convey the descaler solution from the mixing container (41) to the instantaneous water heater (10, 20).

14. Device according to any of the preceding claims, in which the controller is configured to generate a message that a descaling process is required when a predetermined value, in particular for a maximum through-flow time or a minimum flow rate, has been reached.

15. Method for determining a scaling level in a device for preparing hot beverages, wherein the device has an instantaneous water heater (10, 20) for heating water for the preparation of a hot beverage, in which method a flow rate of water flowing through the instantaneous water heater (10, 20) is measured by a flow meter (12, 22) and the scaling level is determined using the flow rate,
**characterised in that**
during the determination of the scaling level, a drainage valve (16, 26) arranged in the flow direction downstream of the instantaneous water heater (10, 20) is moved into a switched position in which water flowing through the instantaneous water heater (10, 20) is conducted directly into a waste water line or a collection container instead of in the direction of a beverage outlet (50) of the device.

## Revendications

1. Dispositif de préparation de boissons chaudes,
- avec une sortie de boisson (55) pour la distribution d'une boisson chaude préparée,
- avec un chauffe-eau instantané (10, 20) pour le chauffage de l'eau lors de la préparation de la boisson chaude,
- avec un débitmètre (12, 22) pour la détermination du volume d'eau s'écoulant par le chauffe-eau instantané (10, 20), et
- avec une soupape de drainage (16, 26) réalisée comme soupape à voie commandable, agencée dans le sens de passage derrière le chauffe-eau instantané (10, 20), par le biais de laquelle de l'eau s'écoulant par le chauffe-eau instantané (10, 20) peut être acheminée plutôt qu'en direction de la sortie de boisson dans une conduite d'eaux usées ou un récipient de collecte d'eaux usées,
avec un dispositif de commande (60) qui présente une fonction de reconnaissance d'entartrage (61) pour la détermination d'un état d'entartrage du chauffe-eau instantané (10, 20) à l'aide de valeurs de mesure du débitmètre (12 22), dans lequel le dispositif de commande (60) est réalisé afin de commuter pendant une détermination de l'état d'entartrage la soupape de drainage (16, 26) dans sa position de commutation, est acheminé dans l'eau venant du chauffe-eau instantané (10, 20) directement dans la conduite d'eaux usées ou le réservoir de collecte d'eaux usées.

2. Dispositif selon la revendication 1, dans lequel la soupape de drainage (16, 26) sert à acheminer dans une phase de chauffage du chauffe-eau instantané (10, 20) l'eau venant du chauffe-eau instantané (10, 20) dans la conduite d'eaux usées ou le récipient de collecte d'eaux usées et la commande (60) est réalisée afin de réaliser la détermination de l'état d'entartrage pendant la phase de chauffage.

3. Dispositif selon la revendication 2, dans lequel la phase de chauffage est réalisée pour chaque prélèvement d'une boisson chaude.

4. Dispositif selon la revendication 1, dans lequel la soupape de drainage (16, 26) sert à acheminer dans une phase de refroidissement du chauffe-eau instantané (10, 20) l'eau venant du chauffe-eau instantané (10, 20) dans la conduite d'eaux usées ou le récipient de collecte d'eaux usées et la commande (60) est réalisée afin de réaliser la détermination de l'état d'entartage pendant la phase de refroidissement.

5. Dispositif selon la revendication 3, dans lequel la phase de refroidissement est réalisée pour chaque prélèvement d'une boisson chaude.

6. Dispositif selon l'une quelconque des revendications précédentes, dans lequel un manomètre (17, 18) est agencé côté entrée du chauffe-eau instantané (10, 20).

7. Dispositif selon l'une quelconque des revendications précédentes, dans lequel le chauffe-eau instantané (10, 20) présente un canal d'écoulement en hélice avec une entrée et une sortie pour un liquide à chauffer, s'écoulant, dont la section transversale de canal s'élargit au moins dans une zone d'extrémité en direction de la sortie.

8. Dispositif selon l'une quelconque des revendications précédentes, qui est équipé d'un système de détartrage (40) pour le détartrage automatique du chauffe-eau instantané (10, 20).

9. Dispositif selon la revendication 8, dans lequel le système de détartrage (40) comporte un récipient de mélange (41) pour le mélange d'une solution de moyen de détartrage, un espace de réception pour un réservoir (42) pour du concentré de détartrage liquide ainsi qu'une pompe de dosage (43) pour le refoulement dosé de concentré de détartrage du réservoir (42) dans le récipient de mélange (41), dans lequel la solution de moyen de détartrage est mélangée à partir du concentré de détartrage et de l'eau.

10. Dispositif selon l'une quelconque des revendications précédentes, qui présente une pompe à eau (11, 12) qui refoule de l'eau d'une conduite d'amenée d'eau potable (30) au chauffe-eau instantané (10, 20).

11. Dispositif selon les revendications 8 et 10, dans lequel la pompe à eau (11, 21) peut être reliée côté aspiration de manière commutable par le biais d'une première soupape à voie (44) à une conduite de prélèvement (49) d'un récipient de mélange (41) qui sert à la réception d'une solution de moyen de détartrage afin de refouler dans la position de soupape commutée de la première soupape à voie (44) la solution de moyen de détartrage du récipient de mélange (41) au chauffe-eau instantané (10, 20).

12. Dispositif selon la revendication 11, dans lequel la pompe à eau (11) est reliable côté pression de manière commutable par le biais d'une seconde soupape à voie (45) à une conduite d'amenée d'eau (47) d'un récipient de mélange (41) qui sert au mélange d'une solution de moyen de détartrage d'un concentré de détartrage liquide afin de refouler dans la position de soupape commutée de la seconde soupape à voie (45) de l'eau vers le récipient de mélange (41).

13. Dispositif selon la revendication 12, dans lequel le dispositif de commande (60) est programmé afin de commander pour la réalisation d'un processus de détartrage la pompe de dosage (43) afin de refouler une quantité prédéterminée de concentré de détartrage du réservoir (42) dans le récipient de mélange (41) qui est encore programmé afin de commuter la seconde soupape à voie (45) afin de relier la pompe à eau (11) à la conduite d'amenée d'eau (47) du récipient de mélange (41), et de commander la pompe à eau (11, 21), de refouler une quantité d'eau prédéfinissable dans le récipient de mélange (41), et qui est encore programmé afin de commuter la première soupape à voie (44) afin de relier la pompe à eau (11) côté aspiration au réservoir de mélange (41) et de refouler la solution de moyen de détartrage du récipient de mélange (41) au chauffe-eau instantané (10, 20).

14. Dispositif selon l'une quelconque des revendications précédentes, dans lequel la commande est réalisée afin de générer lors de l'atteinte d'une valeur prédéfinie, en particulier pour un temps de passage maximal ou un débit minimal, un message, selon lequel un processus de détartrage est nécessaire.

15. Procédé de détermination d'un état d'entartrage pour un dispositif de préparation de boissons chaudes, dans lequel le dispositif présente un chauffe-eau instantané (10, 20) pour le chauffage d'eau pour la préparation d'une boisson chaude, pour lequel procédé un débit de l'eau s'écoulant par le chauffe-eau instantané (10, 20) est mesuré au moyen d'un débitmètre (12, 22) et l'état d'entartrage est déterminé à l'aide du débit,
**caractérisé en ce que**
pendant la détermination de l'état d'entartrage, une soupape de drainage (16, 26) agencée derrière le chauffe-eau instantané (10, 20) dans le sens de débit est amenée dans une position de commutation, dans laquelle de l'eau s'écoulant par le chauffe-eau instantané (10, 20) est acheminée plutôt qu'en direction d'une sortie de boisson (50) du dispositif directement dans une conduite d'eaux usées ou un récipient de collecte.
